# EUROPÄISCHE PATENTSCHRIFT

(11) **EP 3 277 552 B1**
(45) Veröffentlichungstag und Bekanntmachung des Hinweises auf die Patenterteilung: **28.09.2022**
(21) Anmeldenummer: 16712844.6
(22) Anmeldetag: 24.03.2016
(51) Int. Cl.: B60W 10/02, B60W 10/06, B60W 30/18, B60K 6/485

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ PERMETTANT DE FAIRE FONCTIONNER UN DISPOSITIF D'ENTRAÎNEMENT POUR UN VÉHICULE AUTOMOBILE ET DISPOSITIF D'ENTRAÎNEMENT CORRESPONDANT

(30) Priorität: 31.03.2015 DE 102015004118
(43) Veröffentlichungstag der Anmeldung: 07.02.2018
(73) Patentinhaber: Audi AG, 85045 Ingolstadt (DE)
(72) Erfinder: ENKE, Martin, 85057 Ingolstadt (DE)
(86) Internationale Anmeldenummer: PCT/EP2016/056648
(87) Internationale Veröffentlichungsnummer: WO 2016/156245

(56) Entgegenhaltungen:
- DE-A1- 3 208 715
- DE-A1- 4 321 413
- DE-A1- 19 805 459
- DE-C1- 3 204 651

## Beschreibung

Die Erfindung betrifft ein Verfahren zum Betreiben einer Antriebseinrichtung für ein Kraftfahrzeug, wobei die Antriebseinrichtung eine Brennkraftmaschine, eine Abtriebswelle sowie eine zwischen der Brennkraftmaschine und der Abtriebswelle angeschlossene Kupplung aufweist, und wobei in einem Segelbetrieb eine Leerlaufregelung der Brennkraftmaschine auf eine Leerlaufdrehzahl durchgeführt wird sowie die Kupplung geöffnet ist und in einem Schubbetrieb die Kupplung geschlossen ist. Die Erfindung betrifft weiterhin eine Antriebseinrichtung.

Die Antriebseinrichtung dient beispielsweise dem Antreiben des Kraftfahrzeugs, insoweit also dem Bereitstellen eines auf das Antreiben des Kraftfahrzeugs gerichteten Drehmoments, welches auch als Antriebsdrehmoment bezeichnet werden kann. Zum Bereitstellen des Antriebsdrehmoments weist die Antriebseinrichtung wenigstens ein Antriebsaggregat, beispielsweise die Brennkraftmaschine, auf. Selbstverständlich kann die Antriebseinrichtung auch über mehrere, vorzugsweise unterschiedliche, Antriebsaggregate verfügen und insoweit als Hybridantriebseinrichtung ausgestaltet sein. In diesem Fall liegt beispielsweise ein erstes der Antriebsaggregate als Brennkraftmaschine und ein zweites der Antriebsaggregate als elektrische Maschine vor.

Die Antriebseinrichtung weist die Abtriebswelle auf, an welcher das von dem wenigstens einen Antriebsaggregat, insbesondere der Brennkraftmaschine, bereitgestellte Antriebsdrehmoment anliegt. Mit der Abtriebswelle ist vorzugsweise ein Getriebe wirkverbunden, insbesondere starr und/oder permanent. Mit Hilfe der zwischen der Brennkraftmaschine und der Abtriebswelle angeschlossenen Kupplung können insoweit die Abtriebswelle und mithin das Getriebe wahlweise entweder von der Brennkraftmaschine entkoppelt oder mit ihr wirkverbunden werden. Das Getriebe ist vorzugsweise ein Schaltgetriebe, mittels welchem unterschiedliche Übersetzungen einstellbar sind, insbesondere ein manuelles Schaltgetriebe. Die Kupplung liegt beispielsweise als Anfahrkupplung vor. Insbesondere ist das Getriebe als Automatikgetriebe beziehungsweise Automatikschaltgetriebe oder als automatisiertes Schaltgetriebe ausgestaltet. Die Kupplung liegt beispielsweise als Lamellenkupplung oder dergleichen vor.

Um ein möglichst energieeffizientes Betreiben des Kraftfahrzeugs und entsprechend einen möglichst geringen Kraftstoffverbrauch der Brennkraftmaschine sicherzustellen, kann die Antriebseinrichtung in dem sogenannten Segelbetrieb betrieben werden. In diesem ist die Kupplung geöffnet, insbesondere vollständig geöffnet, sodass die Brennkraftmaschine von der Abtriebswelle vollständig entkoppelt ist. Gleichzeitig wird die Leerlaufregelung der Brennkraftmaschine durchgeführt, in welcher die momentane Drehzahl der Brennkraftmaschine auf die Leerlaufdrehzahl geregelt wird. Die Leerlaufdrehzahl wird vorzugsweise so gering wie möglich gewählt, jedoch derart, dass ein Weiterbetrieb der Brennkraftmaschine sichergestellt, ein unbeabsichtigter Stillstand also vermieden wird. Letzterer kann beispielsweise auftreten, wenn die Drehzahl der Brennkraftmaschine zu weit unter die Leerlaufdrehzahl absinkt.

Der Segelbetrieb wird insbesondere durchgeführt, wenn keine Momentenanforderung, beispielsweise von einem Benutzer des Kraftfahrzeugs und/oder einer Fahrerassistenzeinrichtung, vorliegt. Unter der Momentenanforderung ist eine Anforderung an die Antriebseinrichtung zu verstehen, entweder eine Beschleunigung oder eine Verzögerung des Kraftfahrzeugs zu bewirken und entsprechend ein von Null verschiedenes Antriebsdrehmoment an der Abtriebswelle bereitzustellen. Neben dem Segelbetrieb kann die Antriebseinrichtung in dem Schubbetrieb betrieben werden. In diesem soll die Kupplung geschlossen, vorzugsweise vollständig geschlossen, sein. Gleichzeitig wird mit Hilfe der Antriebseinrichtung ein auf das Verzögern des Kraftfahrzeugs gerichtetes Antriebsdrehmoment an der Abtriebswelle bereitgestellt, insbesondere also ein Antriebsdrehmoment, welches kleiner als 0 Nm ist. Ein solches Antriebsdrehmoment wird beispielsweise mittels in der Brennkraftmaschine vorliegender Reibung und/oder durch entsprechendes Ansteuern von Gaswechselventilen erzeugt.

Wird nun die Antriebseinrichtung in dem Segelbetrieb betrieben und es tritt eine Momentenanforderung auf, welche auf das Verzögern des Kraftfahrzeugs gerichtet ist, so muss aus dem Segelbetrieb in den Schubbetrieb umgeschaltet werden. Beispielsweise kann dazu die Drehzahl der Brennkraftmaschine mittels einer entsprechenden Regelung auf eine Getriebedrehzahl des Getriebes eingestellt, insbesondere geregelt werden. Zu diesem Zweck wird die in die Brennkraftmaschine eingebrachte Kraftstoffmenge vergrößert, sodass eine Erhöhung der Brennkraftmaschinedrehzahl ausgehend von der Leerlaufdrehzahl in Richtung der Getriebedrehzahl bewirkt wird. Sobald die Brennkraftmaschinendrehzahl die Getriebedrehzahl erreicht hat, ihr also entspricht, wird die Kupplung vollständig geschlossen. Eine solche Vorgehensweise ist jedoch energieaufwendig beziehungsweise bedingt einen erhöhten Kraftstoffverbrauch.

Aus der Druckschrift DE 32 08 715 A1 ist eine Freilauf-Steuervorrichtung für eine Kraftfahrzeugkupplung bekannt. Zwischen einem Motor und einem Getriebe eines Kraftfahrzeugs ist im Drehmoment-Übertragungsweg eine von einem steuerbaren Kupplungsantrieb einkuppelbare beziehungsweise auskuppelbare Kupplung angeordnet. Über einen Steuerschalter wird die Kupplung ausgerückt, womit das Fahrzeug bei im Leerlauf arbeitendem Motor im Freilauf kraftstoffsparend rollen kann. Bei Betätigung eines Bremspedals rückt die Verknüpfungsschaltung die Kupplung ein und schaltet über ein Kraftstoffventil zugleich die Kraftstoffzufuhr zum Motor ab. Der Motor bremst damit ohne zusätzlichen Kraftstoffverbrauch das Fahrzeug. Alternativ kann die Verknüpfungsschaltung im Freilaufbetrieb die Kraftstoffzufuhr des Motors ständig abgeschaltet haben. Gesteuert von einem den Unterdruck in einem Servo-Bremsgerät erfassenden Druckgeber kuppelt die Verknüpfungsschaltung die Kupplung ein, wenn der Unterdruck auf Werte absinkt, die das Arbeiten des Bremsgeräts nicht mehr gewährleisten. Der im Freilaufbetrieb normalerweise stillstehende Motor wird bei abgeschalteter Kraftstoffzufuhr gedreht und erzeugt den für das Arbeiten des Bremsgeräts erforderlichen Unterdruck. Vor dem Einrücken der Kupplung schaltet die Verknüpfungsschaltung einen Anlassmotor ein, der die Abtriebsdrehzahl des Motors der Drehzahl an der Eingangswelle des Getriebes angleicht.

Weiterhin beschreibt die Druckschrift DE 43 21 413 A1 ein Verfahren und eine Vorrichtung zur Steuerung der Antriebsleistung eines Kraftfahrzeugs, welches im Leerlauf und leerlaufnahen Bereich bei der Einstellung der Antriebsleistung, des vom Motor abgegebenen Motormoments oder des Luftmassenstroms die Turbinendrehzahl eines automatischen Getriebes mit Drehmomentwandler berücksichtigt, derart, dass die Motordrehzahl sowohl bei stehendem als auch bei langsam rollendem Fahrzeug im Wesentlichen konstant ist. Weiterhin sind aus dem Stand der Technik die Druckschriften DE 32 04 651 C1 und DE 198 05 459 A1 bekannt.

Es ist nun Aufgabe der Erfindung, ein Verfahren zum Betreiben einer Antriebseinrichtung für ein Kraftfahrzeug vorzuschlagen, welches gegenüber dem Stand der Technik Vorteile aufweist, insbesondere ein äußerst energieeffizientes Umschalten von dem Segelbetrieb in den Schubbetrieb ermöglicht.

Dies wird erfindungsgemäß erreicht, indem bei einem Umschalten von dem Segelbetrieb in den Schubbetrieb bei gleichzeitigem Durchführen der Leerlaufregelung der Brennkraftmaschine auf die Leerlaufdrehzahl die Kupplung geschlossen wird, sodass ein Anschleppen der Brennkraftmaschine erfolgt, wobei unter Verwendung eines mittels der Kupplung zwischen der Brennkraftmaschine und der Abtriebswelle übertragenen Kupplungsdrehmoments oder einer das Kupplungsdrehmoment beeinflussenden Kupplungsgröße als Stellgröße eine Regelung der Brennkraftmaschinendrehzahl auf die Drehzahl der Abtriebswelle vorgenommen wird. Es ist nun also vorgesehen, die Leerlaufregelung auf die Leerlaufdrehzahl, welche bereits in dem Segelbetrieb vorgenommen wird, auch während des Umschaltens fortzuführen. Besonders bevorzugt wird die Leerlaufregelung während des gesamten Umschaltens durchgeführt. Zudem wird die Kupplung geschlossen, insbesondere lediglich teilweise geschlossen. Unter dem lediglich teilweisen Schließen der Kupplung ist zu verstehen, dass die Kupplung derart eingestellt wird, dass das Kupplungsdrehmoment kleiner ist als das derzeit vorliegende Antriebsdrehmoment, sodass Kupplungsschlupf auftritt.

Durch das Schließen der Kupplung erfolgt das Anschleppen der Brennkraftmaschine, sodass sich die Brennkraftmaschinendrehzahl erhöht, insbesondere in Richtung der Getriebedrehzahl. Die Getriebedrehzahl entspricht insbesondere einer Abtriebswellendrehzahl, also der Drehzahl der Abtriebswelle. Die Brennkraftmaschinendrehzahl wird also in Richtung der Getriebedrehzahl angepasst, insbesondere erhöht. Beispielsweise ist es dabei vorgesehen, die Kupplung auf ein bestimmtes Kupplungsdrehmoment einzustellen. Das Kupplungsdrehmoment beschreibt dabei dass zwischen der Brennkraftmaschine und der Abtriebswelle mittels der Kupplung übertragbare beziehungsweise übertragene Drehmoment. Es wird eine Regelung der Brennkraftmaschinendrehzahl in Richtung beziehungsweise auf die Getriebedrehzahl vorgenommen, wobei das Kupplungsdrehmoment als Stellgröße dient.

Während des Anschleppens der Brennkraftmaschine erhöht sich die Brennkraftmaschinendrehzahl in Richtung der Getriebedrehzahl. Dies wird von der Leerlaufregelung festgestellt, welche die Brennkraftmaschinendrehzahl in Richtung der Leerlaufdrehzahl regelt. Als Stellgröße der Leerlaufregelung dient beispielsweise die der Brennkraftmaschine pro Zeiteinheit zugeführte Kraftstoffmenge. Je deutlicher die Brennkraftmaschinendrehzahl die Leerlaufdrehzahl übersteigt, umso weiter wird die Leerlaufregelung die Kraftstoffmenge pro Zeiteinheit, die der Brennkraftmaschine zugeführt wird, reduzieren. Somit ergibt sich nicht lediglich der Vorteil, dass kein zusätzlicher Kraftstoff für das Beschleunigen der Brennkraftmaschine herangezogen werden muss, sondern dass vielmehr der Kraftstoffverbrauch während des Umschaltens unter den für den Leerlaufbetrieb der Brennkraftmaschine aufzuwendenden Kraftstoffverbrauch fällt.

Es kann vorgesehen sein, dass das Umschalten gemäß den vorstehenden Ausführungen nur in einer ersten Betriebsart durchgeführt wird, also in der ersten Betriebsart die Kupplung zu schließen, während die Leerlaufregelung der Brennkraftmaschine durchgeführt wird. In einer zweiten Betriebsart dagegen wird beispielsweise wie eingangs erläutert die Kupplung zunächst offen gehalten und die Brennkraftmaschinendrehzahl auf die Getriebedrehzahl geregelt, indem die eingespritzte Kraftstoffmenge vergrößert wird. Die Kupplung wird in der zweiten Betriebsart erst dann geschlossen, wenn die Brennkraftmaschinendrehzahl der Getriebedrehzahl entspricht. Dabei wird die Kupplung vorzugsweise schlagartig geschlossen.

Bevorzugt ist es vorgesehen, die erste Betriebsart durchzuführen, wenn eine zu erwartende Reibarbeit der Kupplung kleiner als ein Reibarbeitsgrenzwert und/oder eine zu erwartende Reibleistung der Kupplung kleiner als ein Reibleistungsgrenzwert ist. Die zu erwartende Reibarbeit und die zu erwartende Reibleistung werden beispielsweise unmittelbar vor dem Umschalten ermittelt, insbesondere aus der Getriebedrehzahl, aus der Brennkraftmaschinendrehzahl und/oder aus einer an dem Getriebe eingestellten Übersetzung.

Gemäß der Erfindung ist vorgesehen, dass die Kupplung in einem ersten Schritt lediglich teilweise geschlossen wird. Insbesondere wird unmittelbar zu Beginn des Umschaltens von dem Segelbetrieb in den Schubbetrieb der erste Schritt durchgeführt. Während diesem wird die Kupplung lediglich teilweise geschlossen. Auf diese Art und Weise kann ein sanftes Erhöhen der Brennkraftmaschinendrehzahl in Richtung der Getriebedrehzahl vorgenommen werden. Beispielsweise wird dabei eine Regelung gemäß den vorstehenden Ausführungen durchgeführt, wobei die Brennkraftmaschinendrehzahl in Richtung der Getriebedrehzahl geregelt wird und das Kupplungsdrehmoment oder eine das Kupplungsdrehmoment beeinflussende, insbesondere unmittelbar beeinflussende, Kupplungsgröße als Stellgröße dient. Die Kupplungsgröße ist beispielsweise ein Hydraulikdruck der Kupplung, der das Kupplungsdrehmoment beeinflusst. Alternativ kann sie ein Strom und/oder eine Spannung eines Ventils, insbesondere eines Hydraulikventils, der Kupplung sein, mittels welchem vorzugsweise der Hydraulikdruck eingestellt beziehungsweise geregelt wird. Parallel dazu wird jedoch weiterhin die Leerlaufregelung vorgenommen. Diese regelt ebenfalls die Brennkraftmaschinendrehzahl, jedoch in Richtung der Leerlaufdrehzahl, wobei die Kraftstoffmenge als Stellgröße verwendet wird.

In einer weiteren Ausgestaltung der Erfindung ist vorgesehen, dass die Kupplung in einem zweiten Schritt vollständig geschlossen wird, wenn eine Brennkraftmaschinendrehzahl einer Getriebedrehzahl eines Getriebes der Antriebseinrichtung entspricht. Hierauf wurde vorstehend bereits hingewiesen. Das Getriebe ist Bestandteil der Antriebseinrichtung und ist mit der Abtriebswelle wirkverbunden, vorzugsweise starr und/oder permanent. Unter der Getriebedrehzahl ist die Drehzahl des Getriebes auf dem der Brennkraftmaschine zugewandten Seite des Getriebes zu verstehen. Insbesondere entspricht die Getriebedrehzahl der Drehzahl der Abtriebswelle, mithin also der Abtriebswellendrehzahl. Sobald die Brennkraftmaschinendrehzahl die Getriebedrehzahl erreicht hat, wird der zweite Schritt durchgeführt und entsprechend die Kupplung vollständig geschlossen. Darunter ist zu verstehen, dass die Kupplung derart eingestellt wird, dass keine Kupplungsschlupf mehr vorliegt.

Eine weitere Ausgestaltung der Erfindung sieht vor, dass das Umschalten beendet wird, sobald die Brennkraftmaschinendrehzahl der Getriebedrehzahl entspricht. Der zeitliche Ablauf im Rahmen des Umschaltens stellt sich wie folgt dar. Zunächst wird bis zu einem bestimmten ersten Zeitpunkt der Segelbetrieb durchgeführt. In dem ersten Zeitpunkt wird das Umschalten von dem Segelbetrieb in den Schubbetrieb eingeleitet und bis zu einem zweiten Zeitpunkt durchgeführt, welcher von dem ersten Zeitpunkt verschieden ist. Unmittelbar nach dem zweiten Zeitpunkt ist das Umschalten beendet. Mithin liegt nun der Schubbetrieb vor.

In einer weiteren bevorzugten Ausgestaltung der Erfindung kann vorgesehen sein, dass eine Kraftstoffeinspritzung in die Brennkraftmaschine mit steigender Brennkraftmaschinendrehzahl reduziert wird. Wie bereits erläutert erfolgt während des Umschaltens von dem Segelbetrieb in den Schubbetrieb die Leerlaufregelung der Brennkraftmaschine auf die Leerlaufdrehzahl. Weil die Leerlaufdrehzahl geringer ist als die Getriebedrehzahl, auf weiche die Brennkraftmaschinendrehzahl gebracht werden soll, wird die Leerlaufregelung versuchen, die Vergrößerung der Brennkraftmaschinedrehzahl zu verhindern beziehungsweise diese wieder in Richtung der Leerlaufdrehzahl zu verändern. Entsprechend verringert die Leerlaufregelung die Menge des pro Zeiteinheit in die Brennkraftmaschine eingebrachten Kraftstoffs, sodass insgesamt der Kraftstoffverbrauch während des Umschaltens deutlich reduziert werden kann.

Eine Weiterbildung der Erfindung sieht vor, dass die Kraftstoffeinspritzung ausgesetzt wird, wenn die Brennkraftmaschinendrehzahl eine Brennkraftmaschinenschwellendrehzahl überschreitet. Hat die Brennkraftmaschinendrehzahl die Brennkraftmaschinenschwellendrehzahl erreicht oder überschritten, so kann davon ausgegangen werden, dass auch bei einem Öffnen der Kupplung und einem raschen Absinken der Brennkraftmaschinendrehzahl in Richtung eines Stillstands der Brennkraftmaschine ausreichend Zeit verbleibt, um die Kraftstoffeinspritzung wieder aufzunehmen, um ein Ausgehen der Brennkraftmaschine zu verhindern, insbesondere die Brennkraftmaschinendrehzahl zumindest auf der Leerlaufdrehzahl zu halten.

Die Brennkraftmaschinenschwellendrehzahl wird daher vorzugsweise größer gewählt als die Leerlaufdrehzahl, insbesondere beträgt sie bezogen auf die Leerlaufdrehzahl mindestens 125 %, mindestens 150 %, mindestens 175 % oder mindestens 200 %. Unter dem Aussetzen der Kraftstoffeinspritzung ist vorzugsweise zu verstehen, dass die pro Zeiteinheit in die Brennkraftmaschine eingebrachte Kraftstoffmenge gleich Null beträgt, die Kraftstoffeinspritzung also vollständig unterbrochen wird.

In einer weiteren Ausgestaltung der Erfindung ist vorgesehen, dass die Brennkraftmaschinenschwellendrehzahl kleiner gewählt wird als die Getriebedrehzahl. Die Brennkraftmaschinenschwellendrehzahl kann konstant vorgegeben sein, beispielsweise ab Werk. Sie kann jedoch alternativ auch dynamisch anhand der Getriebedrehzahl ermittelt werden. Insbesondere wird sie kleiner gewählt als diese, sodass insgesamt die Brennkraftmaschinenschwellendrehzahl größer ist als die Leerlaufdrehzahl, jedoch kleiner als die momentan vorliegende Getriebedrehzahl.

Eine bevorzugte Weiterbildung der Erfindung sieht vor, dass von dem Segelbetrieb in den Schubbetrieb bei Betätigung einer Betriebsbremse des Kraftfahrzeugs umgeschaltet wird. Eingangs wurde bereits erläutert, dass der Segelbetrieb vornehmlich verwendet wird, um durch eine Entkopplung der Brennkraftmaschine von der Abtriebswelle den Kraftstoffverbrauch in geeigneten Betriebszuständen des Kraftfahrzeugs zu senken. Der Schubbetrieb dient dagegen einer Verzögerung des Kraftfahrzeugs durch Bereitstellen eines auf ein solches Verzögern gerichteten Antriebsdrehmoments. Insoweit es wünschenswert, den Schubbetrieb einzuleiten, sobald die Betriebsbremse betätigt wird. Eine solche Betätigung kann beispielsweise durch den Fahrer des Kraftfahrzeugs und/oder eine Fahrerassistenzeinrichtung bewirkt werden. Es kann vorgesehen sein, dass jegliche Betätigung der Betriebsbremse ausreichend ist, um die Umschaltung vorzunehmen. Alternativ kann das Umschalten auch erst dann vorgenommen werden, wenn die durch die Betätigung der Betriebsbremse vorgegebene Verzögerung größer als ein Verzögerungsschwellenwert ist.

Schließlich kann in einer weiteren Ausgestaltung der Erfindung vorgesehen sein, dass aus dem Schubbetrieb in einen Leerlaufbetrieb umgeschaltet wird, wenn die Getriebedrehzahl eine Getriebeschwellendrehzahl unterschreitet, wobei in dem Leerlaufbetrieb die Kupplung vollständig geöffnet ist. In dem Schubbetrieb soll die Geschwindigkeit des Kraftfahrzeugs und mithin die Drehzahl der Brennkraftmaschine reduziert werden. Ist dies in dem gewünschten Maße erfolgt, so kann der Leerlaufbetrieb eingeleitet werden. In diesem ist die Kupplung vollständig geöffnet und die vorstehend bereits erläuterte Leerlaufregelung der Brennkraftmaschine auf die Leerlaufdrehzahl wird vorgenommen.

Vorzugsweise wird der Leerlaufbetrieb eingeleitet beziehungsweise aus dem Schubbetrieb in den Leerlaufbetrieb umgeschaltet, wenn die Getriebedrehzahl die Getriebeschwellendrehzahl unterschreitet. Die Getriebeschwellendrehzahl wird dabei beispielsweise derart gewählt, dass sie der Leerlaufdrehzahl entspricht oder bezogen auf diese höchstens 105 %, höchstens 110 %, höchstens 115 %, höchstens 120 % oder höchstens 125 % beträgt.

Die Erfindung betrifft weiterhin eine Antriebseinrichtung für ein Kraftfahrzeug, insbesondere zur Durchführung des vorstehend beschriebenen Verfahrens, mit einer Brennkraftmaschine, einer Abtriebswelle sowie einer zwischen der Brennkraftmaschine und der Abtriebswelle angeschlossenen Kupplung, wobei in einem Segelbetrieb eine Leerlaufregelung der Brennkraftmaschine auf eine Leerlaufdrehzahl durchgeführt wird sowie die Kupplung geöffnet ist und in einem Schubbetrieb die Kupplung geschlossen ist. Dabei ist vorgesehen, dass die Antriebseinrichtung dazu ausgebildet ist, bei einem Umschalten von dem Segelbetrieb in den Schubbetrieb bei gleichzeitigem Durchführen der Leerlaufregelung der Brennkraftmaschine auf die Leerlaufdrehzahl die Kupplung zu schließen, sodass ein Anschleppen der Brennkraftmaschine erfolgt, wobei unter Verwendung eines mittels der Kupplung zwischen der Brennkraftmaschine und der Abtriebswelle übertragenen Kupplungsdrehmoments oder einer das Kupplungsdrehmoment beeinflussenden Kupplungsgröße als Stellgröße eine Regelung der Brennkraftmaschinendrehzahl auf die Drehzahl der Abtriebswelle vorgenommen wird.

Auf die Vorteile eine derartigen Vorgehensweise beziehungsweise einer derartigen Ausgestaltung der Antriebseinrichtung wurde bereits hingewiesen. Sowohl die Antriebseinrichtung als auch das entsprechende Verfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs eines Kraftfahrzeugs, und
- Figur 2: ein Diagramm, in welchem ein Kupplungsdruck über der Zeit aufgetragen ist.

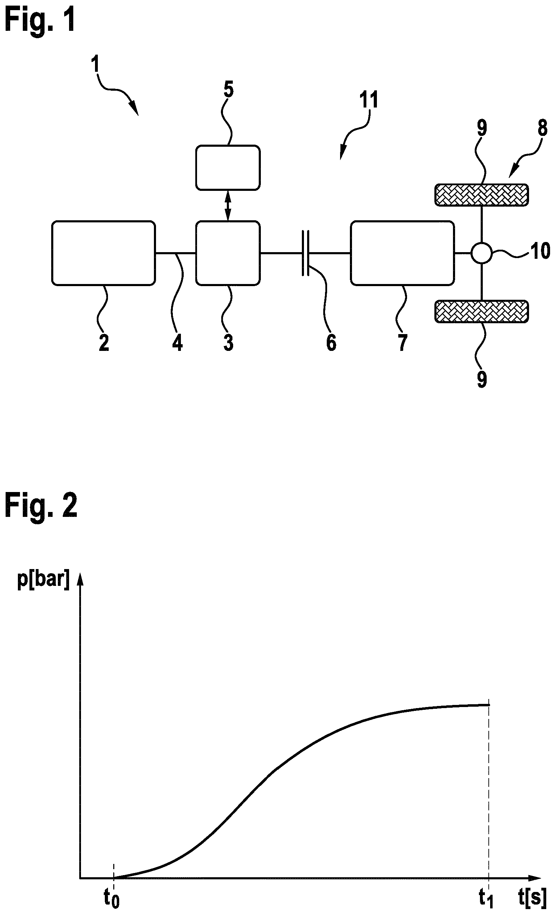

Die Figur 1 zeigt eine schematische Darstellung einer Antriebseinrichtung 1, beispielsweise für ein Kraftfahrzeug, welche in der hier dargestellten Ausführungsform als Hybridantriebseinrichtung vorliegt. Entsprechend weist die Antriebseinrichtung 1 mindestens zwei Antriebsaggregate, nämlich ein erstes Antriebsaggregat 2 und ein zweites Antriebsaggregat 3, auf. Das erste Antriebsaggregat 2 liegt beispielsweise in Form einer Brennkraftmaschine, das zweite Antriebsaggregat 3 als elektrische Maschine vor.

Die beiden Antriebsaggregate 2 und 3 können über eine Welle 4 starr und/oder permanent miteinander wirkverbunden sein. Der Welle 4 kann jedoch auch eine Trennkupplung zugeordnet sein, mittels welcher die Wirkverbindung zwischen den Antriebsaggregaten 2 und 3 unterbrechbar ist. Das zweite Antriebsaggregate 3 beziehungsweise die elektrische Maschine wird mittels einer Leistungselektronik 5 angesteuert, welche beispielsweise ihrerseits mit Hilfe eines Steuergeräts angesteuert wird.

Die Antriebseinrichtung 1 weist zudem eine Kupplung 6, insbesondere eine Anfahrkupplung, sowie ein Getriebe 7, insbesondere ein Schaltgetriebe, auf. Das Getriebe 7 ist über die Kupplung 6 mit der Brennkraftmaschine 2 wirkverbunden oder zumindest wirkverbindbar. Es sei darauf hingewiesen, dass die hier gewählte Darstellung rein beispielhaft ist. Das Getriebe 7 kann als manuelles Schaltgetriebe, Automatikschaltgetriebe oder als automatisiertes Schaltgetriebe, insbesondere als Mehrfachkupplungsgetriebe, beispielswiese als Doppelkupplungsgetriebe, ausgeführt sein. Insbesondere im Falle des Automatikschaltgetriebes oder des automatisierten Schaltgetriebes kann die Kupplung 6 Bestandteil des Getriebes 7 sein.

Weiterhin dargestellt ist eine Achse 8, welche in dem hier dargestellten Ausführungsbeispiel zwei Räder 9 zugeordnet sind. Die Achse 8 beziehungsweise die Räder 9 sind bevorzugt über ein Achsdifferentialgetriebe 10 mit dem Getriebe 7 wirkverbunden, insbesondere starr und/oder permanent. Entsprechend sind die Achse 8 beziehungsweise die Räder 9 mittels der Brennkraftmaschine 2 und/oder der elektrischen Maschine 3 antreibbar. Die Antriebseinrichtung 1 kann zusammen mit der Achse 8, den Rädern 9 sowie dem Achsdifferentialgetriebe 10 einen Antriebsstrang 11 für das Kraftfahrzeug bilden.

Die Antriebseinrichtung 1 kann nun zumindest in einem Segelbetrieb und einem Schubbetrieb betrieben werden. In dem Segelbetrieb wird eine Leerlaufregelung der Brennkraftmaschine 2 auf eine Leerlaufdrehzahl vorgenommen. Gleichzeitig ist die Kupplung 6 geöffnet. In einem Schubbetrieb ist dagegen die Kupplung 6 geschlossen, insbesondere vollständig geschlossen, sodass über die Kupplung 6 und das Getriebe 7 ein auf ein Verzögern des Kraftfahrzeugs gerichtetes Antriebsdrehmoment der Brennkraftmaschine 2 auf die Achse 8 beziehungsweise die Räder 9 aufbringbar ist.

Soll nun von dem Segelbetrieb in den Schubbetrieb umgeschaltet werden, so wird die Kupplung 6 geschlossen, während gleichzeitig weiterhin die Leerlaufregelung der Brennkraftmaschine 2 durchgeführt wird. Durch das Schließen der Kupplung 6 erfolgt ein Anschleppen der Brennkraftmaschine 2. Weil die Leerlaufregelung versucht, die Brennkraftmaschinendrehzahl der Brennkraftmaschine 2 auf der Leerlaufdrehzahl zu halten, wird sie mit steigender Brennkraftmaschinendrehzahl die als Stellgröße dienende Kraftstoffmenge pro Zeiteinheit, welche der Brennkraftmaschine 2 zugeführt wird, reduzieren. Folglich resultiert aus dieser Vorgehensweise eine deutliche Kraftstoffeinsparung.

Die Figur 2 zeigt ein Diagramm, in welchem ein Kupplungsdruck p der Schaltkupplung 6 über der Zeit t aufgetragen ist. Für t < to befindet sich die Antriebseinrichtung in ihrem Segelbetrieb. Ab dem Zeitpunkt t = to erfolgt das Umschalten von dem Segelbetrieb in den Schubbetrieb, wobei letzterer für t > t₁ vorliegt. Das Umschalten ist in dem Zeitpunkt t = t₁ beendet, wobei sich unmittelbar nachfolgend der Schubbetrieb anschließt. Der Kupplungsdruck p verläuft analog zu einem Kupplungsdrehmoment, also demjenigen Drehmoment, welches maximal über die Kupplung 6 übertragbar ist.

Es wird deutlich, dass der Kupplungsdruck für t < to gering ist, beispielsweise null beträgt. Während des Umschaltens, also in dem Zeitraum to ≤ t ≤ t₁, wird der Kupplungsdruck p stetig erhöht. Es tritt also kein Sprung in dem Kupplungsdruck p auf, wie dies bei einem plötzlichen Einkuppeln mittels der Kupplung 6 der Fall wäre. Ein solches plötzliches Einkuppeln könnte vorgenommen werden, wenn die Brennkraftmaschine 2 aus eigener Kraft auf eine an dem Getriebe 7 vorliegende Getriebedrehzahl gebracht werden würde. Demgegenüber ist ein Anschleppen der Brennkraftmaschine 2 vorgesehen, um den Kraftstoffverbrauch während des Umschaltens von dem Segelbetrieb in den Schubbetrieb deutlich zu verringern.

## Patentansprüche

1. Verfahren zum Betreiben einer Antriebseinrichtung (1) für ein Kraftfahrzeug, wobei die Antriebseinrichtung (1) eine Brennkraftmaschine (2), eine Abtriebswelle sowie eine zwischen der Brennkraftmaschine (2) und der Abtriebswelle angeschlossene Kupplung (6) aufweist, und wobei in einem Segelbetrieb eine Leerlaufregelung der Brennkraftmaschine (2) auf eine Leerlaufdrehzahl durchgeführt wird sowie die Kupplung (6) geöffnet ist und in einem Schubbetrieb die Kupplung (6) geschlossen ist, **dadurch gekennzeichnet, dass** bei einem Umschalten von dem Segelbetrieb in den Schubbetrieb bei gleichzeitigem Durchführen der Leerlaufregelung der Brennkraftmaschine (2) auf die Leerlaufdrehzahl die Kupplung (6) geschlossen wird, sodass ein Anschleppen der Brennkraftmaschine (2) erfolgt, wobei unter Verwendung eines mittels der Kupplung (6) zwischen der Brennkraftmaschine (2) und der Abtriebswelle übertragenen Kupplungsdrehmoments oder einer das Kupplungsdrehmoment beeinflussenden Kupplungsgröße als Stellgröße eine Regelung der Brennkraftmaschinendrehzahl auf die Drehzahl der Abtriebswelle vorgenommen wird.

2. Verfahren nach Anspruch 1, **dadurch gekennzeichnet, dass** die Kupplung (6) vollständig geschlossen wird, wenn eine Brennkraftmaschinendrehzahl der Drehzahl der Abtriebswelle entspricht.

3. Verfahren nach einem der vorhergehenden Ansprüche, **dadurch gekennzeichnet, dass** das Umschalten beendet wird, sobald die Brennkraftmaschinendrehzahl der Drehzahl der Abtriebswelle entspricht.

4. Verfahren nach einem der vorhergehenden Ansprüche, **dadurch gekennzeichnet, dass** eine Kraftstoffeinspritzung in die Brennkraftmaschine (2) mit steigender Brennkraftmaschinendrehzahl reduziert wird.

5. Verfahren nach Anspruch 4, **dadurch gekennzeichnet, dass** die Kraftstoffeinspritzung ausgesetzt wird, wenn die Brennkraftmaschinendrehzahl eine Brennkraftmaschinenschwellendrehzahl überschreitet.

6. Verfahren nach Anspruch 5, **dadurch gekennzeichnet, dass** die Brennkraftmaschinenschwellendrehzahl kleiner gewählt wird als die Drehzahl der Abtriebswelle.

7. Verfahren nach einem der vorhergehenden Ansprüche, **dadurch gekennzeichnet, dass** von dem Segelbetrieb in den Schubbetrieb bei Betätigung einer Betriebsbremse des Kraftfahrzeugs umgeschaltet wird.

8. Verfahren nach einem der vorhergehenden Ansprüche, **dadurch gekennzeichnet, dass** aus dem Schubbetrieb in einen Leerlaufbetrieb umgeschaltet wird, wenn die Getriebedrehzahl eine Getriebeschwellendrehzahl unterschreitet, wobei in dem Leerlaufbetrieb die Kupplung (6) vollständig geöffnet ist.

9. Antriebseinrichtung (1) für ein Kraftfahrzeug, insbesondere zur Durchführung des Verfahrens nach einem oder mehreren der vorhergehenden Ansprüche, mit einer Brennkraftmaschine (2), einer Abtriebswelle sowie einer zwischen der Brennkraftmaschine (2) und der Abtriebswelle angeschlossenen Kupplung (6), wobei in einem Segelbetrieb eine Leerlaufregelung der Brennkraftmaschine (2) auf eine Leerlaufdrehzahl durchgeführt wird sowie die Kupplung (6) geöffnet ist und in einem Schubbetrieb die Kupplung (6) geschlossen ist, **dadurch gekennzeichnet, dass** die Antriebseinrichtung (1) dazu ausgebildet ist, bei einem Umschalten von dem Segelbetrieb in den Schubbetrieb bei gleichzeitigem Durchführen der Leerlaufregelung der Brennkraftmaschine (2) auf die Leerlaufdrehzahl die Kupplung (6) zu schließen, sodass ein Anschleppen der Brennkraftmaschine (2) erfolgt, wobei unter Verwendung eines mittels der Kupplung (6) zwischen der Brennkraftmaschine (2) und der Abtriebswelle übertragenen Kupplungsdrehmoments oder einer das Kupplungsdrehmoment beeinflussenden Kupplungsgröße als Stellgröße eine Regelung der Brennkraftmaschinendrehzahl auf die Drehzahl der Abtriebswelle vorgenommen wird.

## Claims

1. Method for operating a drive apparatus (1) for a motor vehicle, wherein the drive apparatus (1) has an internal combustion engine (2), an output shaft and a clutch (6) connected between the internal combustion engine (2) and the output shaft, and wherein in a coasting mode an idling speed control of the internal combustion engine (2) to an idling speed is carried out and the clutch (6) is opened, and in an overrun mode the clutch (6) is closed, **characterised in that** when there is a shift from the coasting mode to the overrun mode when the idling speed control of the internal combustion engine (2) to the idling speed is simultaneously carried out, the clutch (6) is closed such that the internal combustion engine (2) is tow-started, wherein a clutch torque transmitted by means of the clutch (6) between the internal combustion engine (2) and the output shaft or a clutch variable influencing the clutch torque is used as a manipulated variable to control the internal combustion engine speed to the speed of the output shaft.

2. Method according to claim 1, **characterised in that** the clutch (6) is completely closed when an internal combustion engine speed corresponds to the speed of the output shaft.

3. Method according to any of the preceding claims, **characterised in that** the shifting is terminated as soon as the internal combustion engine speed corresponds to the speed of the output shaft.

4. Method according to any of the preceding claims, **characterised in that** a fuel injection into the internal combustion engine (2) is reduced as the internal combustion engine speed increases.

5. Method according to claim 4, **characterised in that** the fuel injection is suspended when the internal combustion engine speed exceeds an internal combustion engine threshold speed.

6. Method according to claim 5, **characterised in that** the internal combustion engine threshold speed is chosen to be less than the speed of the output shaft.

7. Method according to any of the preceding claims, **characterised in that** shifting from the coasting mode to the overrun mode occurs when an operating brake of the motor vehicle is actuated.

8. Method according to any of the preceding claims, **characterised in that** shifting from the overrun mode to an idling mode occurs when the gear speed falls below a gear threshold speed, wherein the clutch (6) is completely opened in the idling mode.

9. Drive apparatus (1) for a motor vehicle, in particular for carrying out the method according to one or more of the preceding claims, having an internal combustion engine (2), an output shaft and a clutch (6) connected between the internal combustion engine (2) and the output shaft, wherein in a coasting mode an idling speed control of the internal combustion engine (2) to an idling speed is carried out and the clutch (6) is opened, and in an overrun mode the clutch (6) is closed, **characterised in that** the drive apparatus (1) is designed, when there is a shift from the coasting mode to the overrun mode when the idling speed control of the internal combustion engine (2) to the idling speed is simultaneously carried out, to close the clutch (6) such that the internal combustion engine (2) is tow-started, wherein a clutch torque transmitted by means of the clutch (6) between the internal combustion engine (2) and the output shaft or a clutch variable influencing the clutch torque is used as a manipulated variable to control the internal combustion engine speed to the speed of the output shaft.

## Revendications

1. Procédé servant à faire fonctionner un appareil de propulsion (1) pour un véhicule automobile, dans lequel l'appareil de propulsion (1) comporte un moteur à combustion interne (2), un arbre de sortie ainsi qu'un embrayage (6) raccordé entre le moteur à combustion interne (2) et l'arbre de sortie, et dans lequel dans un mode roue libre, une régulation de ralenti du moteur à combustion interne (2) sur une vitesse de ralenti est réalisée et l'embrayage (6) est ouvert, et l'embrayage (6) est fermé dans un mode de poussée, **caractérisé en ce que** lors d'une commutation du mode roue libre au mode de poussée, lorsque la régulation de ralenti du moteur à combustion interne (2) sur la vitesse de ralenti est effectuée simultanément, l'embrayage (6) est fermé de sorte qu'un démarrage du moteur à combustion interne (2) se produit, dans lequel une régulation du régime de rotation du moteur à combustion interne sur le régime de rotation de l'arbre de sortie est effectuée à l'aide de l'embrayage (6) transmis entre le moteur à combustion interne (2) et l'arbre de sortie ou à l'aide d'une grandeur d'embrayage, en tant que grandeur de réglage, influençant le couple d'embrayage.

2. Procédé selon la revendication 1, **caractérisé en ce que** l'embrayage (6) est entièrement fermé, lorsqu'un régime de rotation du moteur à combustion interne correspond au régime de rotation de l'arbre de sortie.

3. Procédé selon l'une quelconque des revendications précédentes, **caractérisé en ce que** la commutation est achevée dès que le régime de rotation du moteur à combustion interne correspond au régime de rotation de l'arbre de sortie.

4. Procédé selon l'une quelconque des revendications précédentes, **caractérisé en ce qu'**une injection de carburant dans le moteur à combustion interne (2) est réduite avec l'augmentation du régime de rotation du moteur à combustion interne.

5. Procédé selon la revendication 4, **caractérisé en ce que** l'injection de carburant est suspendue lorsque le régime de rotation du moteur à combustion interne dépasse un régime de rotation de seuil du moteur à combustion interne.

6. Procédé selon la revendication 5, **caractérisé en ce que** le régime de rotation de seuil du moteur à combustion interne est sélectionné inférieur au régime de rotation de l'arbre de sortie.

7. Procédé selon l'une quelconque des revendications précédentes, **caractérisé en ce qu'**une commutation du mode roue libre au mode de poussée a lieu lorsqu'un frein de service du véhicule est actionné.

8. Procédé selon l'une quelconque des revendications précédentes, **caractérisé en ce qu'**une commutation du mode de poussée en un mode roue libre a lieu lorsque le régime de rotation de la boîte de vitesses se situe en dessous d'un régime de rotation de seuil de la boîte de vitesses, l'embrayage (6) étant entièrement ouvert dans le mode roue libre.

9. Appareil de propulsion (1) pour un véhicule automobile, en particulier pour la réalisation du procédé selon une ou plusieurs des revendications précédentes, avec un moteur à combustion interne (2), un arbre de sortie ainsi qu'un embrayage (6) raccordé entre le moteur à combustion interne (2) et l'arbre de sortie, dans lequel dans un mode roue libre, une régulation de ralenti du moteur à combustion interne (2) sur une vitesse de ralenti est réalisée et l'embrayage (6) est ouvert, et dans un mode de poussée l'embrayage (6) est fermé, **caractérisé en ce que** l'appareil de propulsion (1) est conçu pour fermer l'embrayage (6) lors d'une commutation du mode roue libre au mode de poussée, lorsque la régulation de ralenti du moteur à combustion interne (2) sur la vitesse de ralenti est effectuée simultanément, de sorte qu'un démarrage du moteur à combustion interne (2) se produit, dans lequel une régulation du régime de rotation du moteur à combustion interne sur le régime de rotation de l'arbre de sortie est effectuée à l'aide de l'embrayage (6) transmis entre le moteur à combustion interne (2) et l'arbre de sortie ou à l'aide d'une grandeur d'embrayage, en tant que grandeur de réglage, influençant le couple d'embrayage.
